Europäisches Patentamt

European Patent Office

Office européen des brevets

(19)

(11) **EP 0 584 502 B1**

(12) **EUROPÄISCHE PATENTSCHRIFT**

(45) Veröffentlichungstag und Bekanntmachung des Hinweises auf die Patenterteilung:
**01.10.1997 Patentblatt 1997/40**

(21) Anmeldenummer: 93110956.5

(22) Anmeldetag: **08.07.1993**

(51) Int. Cl.[6]: **C01F 7/76**, C01F 11/46, C02F 1/52, C02F 5/06, C02F 1/58

(54) **Verfahren zur spontanen Fällung von in Wasser gelösten Sulfaten als Calciumaluminiumsulfat und Anwendung dieses Verfahrens zur Herstellung eines chloridarmen, aluminiumoxidhaltigen Gips-Anhydrits**

Process for the spontaneous precipitation of sulfates dissolved in water as calcium aluminium sulfate and the application of this process for the preparation of low-chloride gypsum-anhydrite containing aluminium oxide

Procédé de précipitation spontanée des sulfates dissous dans l'eau sous forme de sulfate d'aluminium et de calcium et utilisation de ce procédé pour la préparation de gypse du type anhydrite contenant de l'oxide d'aluminium et pauvre en chlorures

(84) Benannte Vertragsstaaten:
**AT BE CH DE FR GB IT LI LU NL**

(30) Priorität: **21.08.1992 DE 4227815**

(43) Veröffentlichungstag der Anmeldung:
**02.03.1994 Patentblatt 1994/09**

(73) Patentinhaber: RETHMANN
Lippewerk Recycling GmbH
44536 Lünen (DE)

(72) Erfinder:
- **Bings, Hubert**
**D-44532 Lünen (DE)**
- **Kaiser, Heiko**
**D-45663 Recklinghausen (DE)**
- **Lehmkuhl, Josef**
**D-61348 Bad Homburg v.d.H. (DE)**
- **Köhnk, Diethelm**
**D-44536 Lünen (DE)**

(74) Vertreter: **Hartmann, Günter, Dr. Dipl.-Chem.**
**Ruschke Hartmann Becker**
**Pienzenauerstrasse 2**
**81679 München (DE)**

(56) Entgegenhaltungen:
EP-A- 0 250 626          EP-A- 0 394 557
WO-A-92/12934          DE-A- 3 709 950

- **CHEMICAL ABSTRACTS, vol. 86, no. 22, 30.Mai 1977 Columbus, Ohio, US; abstract no. 160704m, NEBGEN, J. W. & AL. 'Treatment of acid mine drainage by the alumina-lime-soda process' & GOV. REP. ANNOUNCE INDEX, Bd. 77, Nr. 4, 1977 US, Seite 108**
- **CHEMICAL ABSTRACTS, vol. 113, no. 18, 29.Oktober 1990 Columbus, Ohio, US; abstract no. 158006t, SAL'NIKOVA L. E. & AL. 'Sulfate precipitation from wastewater by calcium aluminates' & KIHM. TEKHNOL. VODY, Bd. 12, Nr. 4, 1990 Seiten 319-322,**
- **CHEMICAL ABSTRACTS, vol. 81, no. 24, 16.Dezember 1974 Columbus, Ohio, US; abstract no. 155321b, MINIGAWA YUKINORI & AL. 'Producing ettringite from the waste solution of anodizing of aluminum products' & JP-A-49 002 738 (MITSUBISHI CHEMICAL INDUSTRIES CO. LTD.) 11.Januar 1974**
- **KORRESPONDENZ ABWASSER, Nr. 9, September 1991 Seiten 1230-1237, HEIL G.; THÖNNESSEN V. 'Reduktion der Sulfatgehalte in industriell-gewerblichen Abwasser durch Ausfällung als Ettringit'**

EP 0 584 502 B1

**Beschreibung**

Die Erfindung betrifft ein Verfahren zur spontanen chemischen Fällung von in Wasser gelösten Sulfaten als Calciumaluminiumsulfat (mit der Summenformel $Al_2(SO_4)_3.6Ca(OH)_2.26H_2O$) unter Verwendung einer Kalkhydrat-Suspension (Kalkmilch) und einer Natriumhydroxoaluminat-Lösung als Fällungsmittel, sowie die Anwendung dieses Verfahrens zur Herstellung von Calciumaluminiumsulfaten, die unter Anwendung eines an sich bekannten thermischen Prozesses in technischem Maßstab zu chloridarmem, aluminiumoxidhaltigem Gips-Anhydrid, einem vermarktungsfähigen Baustoff, verarbeitet werden können.

Sulfathaltige wäßrige Lösungen fallen in außerodentlich großem Umfange insbesondere in der chemischen Industrie an, beispielsweise bei der Herstellung und Verarbeitung von Schwefelsäure sowie bei der Rauchgasentschwefelung von Kraftwerken, Großfeuerungsanlagen und Industriebetrieben. Die Abtrennung von $SO_2$ aus Rauchgasen erfolgt derzeit überwiegend durch Neutralisation mit Kalk in Gaswaschanlagen. Dabei fallen $H_2SO_4$-haltige Abwässer in großen Mengen an.

Sulfationen greifen, obgleich sie toxikologisch verhältnismäßig harmlos sind, Beton an und führen zu einer Zerstörung von Abwasserkanälen aus Beton. Da Sulfat im öffentlichen Abwasserkanalnetz aufgrund seiner betonkorrosiven Eigenschaften große Probleme bereitet, muß der Sulfatgehalt der Abwässer vor dem Einleiten in das öffentliche Kanalnetz in der Regel auf Werte von etwa 600 mg/l gesenkt werden. Die gesetzlich vorgeschriebenen Grenzwerte für den Sulfatgehalt von Abwässern, die in öffentliche Kanalnetze eingeleitet werden, liegen allgemein im Bereich von 400 bis 600 mg $SO_4^{2-}$/l.

Darüber hinaus führen Sulfate auch zu einer aus Umweltschutzgründen unerwünschten Aufsalzung von Oberflächengewässern.

Um die obengenannten Sulfat-Grenzwerte einzuhalten, müssen Verfahren zur Verringerung der Sulfatkonzentration angewendet werden, da ein einfaches Verdünnen von sulfathaltigen wäßrigen Lösungen mit Leitungswasser oder anderen sulfatarmen Abwässern keine wirtschaftlich und ökologisch gangbare Lösung darstellt.

Üblicherweise wird daher Kalkmilch, eine wäßrige Suspension von CaO bzw. $Ca(OH)_2$, dem sulfathaltigen Abwasser zugesetzt, um das unerwünschte Sulfat in Form von Calciumsulfat (Gips) auszufällen. Gleichzeitig wird dadurch das auf diese Weise behandelte Abwasser neutralisiert nach der Gleichung:

$$Ca^{2+} + 2OH^- + 2H^+ + SO_4^{2-} + nH_2O \rightarrow CaSO_4.2H_2O + nH_2O \tag{1}$$

Dabei entsteht Gips ($CaSO_4.2H_2O$), der aufgrund seiner verhältnismäßig geringen Löslichkeit ausfällt. Die Gipsfällung nach der obigen Reaktionsgleichung verläuft aber häufig nicht bis zur Löslichkeitsgrenze, so daß im Ablauf der Neutralisations- und Fällungsanlagen immer noch hohe Sulfatfrachten (1700 mg $SO_4^{2-}$/l und mehr) auftreten. Außerdem fällt der Gips aus den übersättigten Lösungen häufig an ungeeigneten Stellen aus, wodurch Ansatzbildungen in Leitungssystemen und Apparaturen auftreten.

Aufgrund des Löslichkeitsprodukts von Calciumsulfat bzw. Gips ($6,1.10^{-5}$ $Mol^2/l^2$ bei 25°C) errechnet sich für den Gleichgewichtszustand eine Sulfatkonzentration in der Lösung von 750 mg $SO_4^{2-}$/l bei 25°C.

Um nun die gesetzlich vorgeschriebenen Grenzwerte von 400 bis 600 mg $SO_4^{2-}$/l zur Einleitung von Abwässern in das Kanalnetz zu erreichen, müssen die mit Kalkmilch behandelten Abwässer nach der Abtrennung des Calciumsulfats (als Gips) mit sulfatfreien Wässern verdünnt werden, wozu in der Regel kostbares Grundwasser verwendet werden muß. Da Grundwasser aber nicht unbegrenzt verfügbar ist und zu den schützenswerten Gütern der Industriegesellschaft zählt, kann die Sulfatfällung als $CaSO_4.2H_2O$ nur als Behelf angesehen werden, obgleich sie die bisher wirtschaftlichste und toxikologisch unbedenklichste Methode darstellt.

Eine weitergehende Absenkung der Sulfatkonzentration als durch Ausfällung von $CaSO_4.2H_2O$ ist theoretisch durch Einbringen von Barium- bzw. Strontiumionen möglich, da die dabei entstehenden Sulfate ein niedrigeres Löslichkeitsprodukt als $CaSO_4$ aufweisen ($BaSO_4$: $1,1.10^{-10}$ $Mol^2/l^2$ bei 25°C; $SrSO_4$ $2,8.10^{-7}$ $Mol^2/l^2$ bei 25°C). Die Verwendung solcher Salze für die großtechnische Abwasseraufbereitung ist jedoch aufgrund ihrer Toxizität sowie aus wirtschaftlichen Erwägungen ausgeschlossen.

Die Ausfällung von Calciumaluminiumsulfaten aus wäßrigen sulfathaltigen Lösungen durch Zugabe von Calciumhydroxid und Calciumsalzen als Fällungsmittel bei pH-Werten im Bereich von 9 bis 11,8 ist aus "Journal WPCF" **48** (1976), S. 2804 bis 2808, und ibid., **50** (1978), S. 1821 bis 1826, anhand labormäßiger Untersuchungen an synthetischen Abwässern bereits bekannt. Abgesehen von dem Umstand, daß durch diese Verfahren anstelle der Sulfationen andere störende Anionen, wie Chlorid- und Nitratanionen, in das Abwasser eingeführt werden, was bereits eine industrielle Anwendung dieser Verfahren aus wirtschaftlichen und insbesondere abwassertechnologischen Gründen ausschließt, lassen sich diese Verfahren wegen der außerordentlich langen Reaktionszeiten von mehreren Wochen und der dadurch bedingten hohen Reaktorvolumina nicht auf reale Industrieabwässer anwenden.

Eine weitere Möglichkeit, die Sulfationenkonzentation unter die $CaSO_4$-Löslichkeit zu senken, besteht in der Verwendung von Calciumaluminaten, wobei gleichzeitig Calciumionen in geringem Überschuß vorliegen müssen. Unter diesen Bedingungen kann sich das stabile Calciumaluminiumsulfat Ettringit der Formel $3CaO.Al_2O_3.3CaSO_4.32H_2O$

bilden. In kalkhaltigen Wässern ist die Löslichkeit des Ettringits sehr gering.

Die Bildung von Ettringit tritt allerdings nur unter sehr speziellen Bedingungen auf. Wie aus "Can. J. Chem." 38 (1960), Seiten 1218 bis 1226, bekannt, tritt eine Ettringitbildung aus Calciumaluminaten und gemischten $Ca(OH)_2$/$CaSO_4$-Lösungen unter Laborbedingungen erst bei erhöhten Temperaturen im Bereich der Siedetemperatur entsprechender Fällungssysteme auf, wofür allerdings außerordentlich lange Reaktionszeiten von bis zu 70 Tagen erforderlich sind.

Die Bildung von Ettringit erfolgt in Gegenwart von $CaSO_4$, das auch aus der weiter oben erläuterten Vorfällung mit $Ca(OH)_2$ stammen kann, nach der Reaktionsgleichung:

$$3CaO.Al_2O_3 + 3CaSO_4 + 32H_2O \rightarrow 3CaO.Al_2O_3.3CaSO_4.32H_2O \qquad (2)$$

Inzwischen wurde festgestellt, daß die Bildung von Ettringit durch Alkali beschleunigt wird. So erlaubt das Verfahren nach Kellermann, Mehlmann und Peschen, wie es im "Forschungsbericht Nr. 2/84 der Forschungsgemeinschaft der deutschen Kalkindustrie e.V., Köln" beschrieben ist, eine Abtrennung von Sulfationen aus Abwässern bis zu Restkonzentrationen von < 5 mg/l unter Bildung von Calciumaluminiumsulfaten. Dafür sind allerdings unter den angewendeten Verfahrensbedingungen sehr lange Fällungszeiten von 10 bis 12 h erforderlich, was aus großtechnischer Sicht sowohl hinsichtlich der erforderlichen Apparategrößen als auch hinsichtlich der Wirtschaftlichkeit des Prozesses außerordentlich nachteilig ist.

Aus EP-B-0 250 626 ist ein Verfahren zur Abtrennung von Sulfationen aus Industrieabwässern bekannt, bei dem durch Ausfällung von schwerlöslichen Calciumaluminiumsulfaten durch Verwendung von Aluminiumoxid und/oder Calciumaluminaten unter pH-Einstellung mit $Ca(OH)_2$ auf einen Wert im Bereich von 11,2 bis 11,8 und Durchführung der Fällungsreaktion bei einer Temperatur von 25 bis 35°C Ettringit als Fällungsprodukt erhalten wird. Die zur Durchführung dieses Verfahrens erforderlichen Fällungszeiten von bis zu 5 h sind jedoch für eine großtechnische Durchführung des Verfahrens immer noch zu lang.

Aufgabe der Erfindung war es daher, ausgehend von diesem Stand der Technik, ein Verfahren zur hochwirksamen Abtrennung von Sulfationen aus wäßrigen Lösungen, vorzugsweise Industrieabwässern, anzugeben, mit dem erheblich unter der durch die Löslichkeit von $CaSO_4$ bedingten Sulfationenkonzentration liegende $SO_4^{2-}$-Konzentrationen in für die großtechnische Anwendung ausreichend kurzen Reaktionszeiten ohne apparativen Mehraufwand gegenüber der herkömmlichen Verfahrensweise erzielt werden können.

Es wurde nun überraschend gefunden, daß diese Aufgabe erfindungsgemäß dadurch gelöst werden kann, daß die chemische Fällung von in Wasser gelösten Sulfaten als Calciumaluminiumsulfat durch Zugabe einer Kalkhydrat-Suspension und einer Natriumhydroxoaluminat-Lösung als Fällungsmittel in solchen Mengen durchgeführt wird, daß ein Molverhältnis von $SO_4^{2-}$:$Al_2O_3$:CaO von 1,0 : (0,2 bis 0,34) : (0,8 bis 2,0) und ein Fällungs-pH-Wert von größer als 12,5 (> 12,5) eingehalten werden. Dabei erhält man Calciumaluminiumsulfat mit der Summenformel $Al_2(SO_4)_3.6Ca(OH)_2.26H_2O$, das nach einem an sich bekannten thermischen Prozeß in großtechnischem Maßstab zu einem chloridarmen, aluminiumoxidhaltigen Gips-Anhydrid verarbeitet werden kann, der als vermarktungsfähiger Baustoff anfällt.

Gegenstand der Erfindung ist ein Verfahren zur spontanen chemischen Fällung von in Wasser gelösten Sulfaten als Calciumaluminiumsulfaten, unter Verwendung einer Kalkhydrat-Suspension (Kalkmilch) und einer Natriumhydroxoaluminat-Lösung als Fällungsmittel, das dadurch gekennzeichnet ist, daß dem sulfathaltigen Wasser nach der Bestimmung seines Sulfatgehaltes die Kalkhydrat-Suspension und die Natriumhydroxoaluminat-Lösung in solchen Mengen zugegeben werden, daß das Molverhältnis $SO_4^{2-}$:$Al_2O_3$:CaO 1,0:(0,2 bis 0,34):(0,8 bis 2,0) beträgt, und daß die Fällung unter Rühren durchgeführt wird, wobei der pH-Wert auf einen Wert > 12,5 eingestellt wird.

Nach dem erfindungsgemäßen Verfahren läßt sich der Sulfatgehalt von sulfathaltigen wäßrigen Lösungen, insbesondere von Industrieabwässern, innerhalb weniger Minuten, im allgemeinen innerhalb von 15 Minuten, vorzugsweise innerhalb von 1 bis 5 Minuten, auf Werte unter 100 mg/l, vorzugsweise unter 50 mg/l, senken, ohne daß es dazu eines wesentlichen finanziellen, apparativen oder personellen Mehraufwandes gegenüber den bereits bekannten Gips-Fällungsverfahren bedarf. Dies wird dadurch möglich, daß insbesondere bei Verwendung von Kalkhydrat und Natriumhydroxoaluminat als Fällungsmittel unter Einhaltung der obengenannten kritischen Molverhältnisse und eines Mindest-pH-Wertes von 12,6 die Ausfällung von Calciumaluminiumsulfat innerhalb weniger Minuten erfolgt.

Theoretisch wäre es zwar auch möglich, anstelle von Natriumhydroxoaluminat andere gelöste Aluminiumverbindungen wie Aluminiumchlorid oder Aluminiumnitrat zu verwenden. Weil jedoch durch die Verwendung solcher Aluminiumsalze zusätzliche Anionen (Chlorid- bzw. Nitratanionen) ins Abwasser gelangen, wäre dies ökologisch nicht sinnvoll. Zudem werden in der Kombination mit Aluminiumchlorid bzw. Aluminiumnitrat plus Kalkhydrat keine so hohen pH-Werte erzielt, nämlich maximal ein pH-Wert von 12,3. Durch die Verwendung einer Natriumhydroxoaluminat-Lösung wird der pH-Wert auf Werte über 12,5 vorzugsweise über 13, erhöht und damit die Sulfatfällung noch effektiver.

Bevorzugte Ausgestaltungen des erfindungsgemäßen Verfahrens ergeben sich aus den Unteransprüchen.

Besonders bevorzugt ist die Zugabe einer Kalkhydrat-Suspension und einer Natriumhydroxoaluminat-Lösung in solchen Mengen, daß das Molverhältnis $SO_4^{2-}$:$Al_2O_3$:CaO 1,0:(0,2 bis 0,34):(0,8 bis 2,0), beträgt.

3

Die Fällung wird vorzugsweise bei einem pH-Wert in dem Bereich von 12,6 bis 13,6, insbesondere von 12,8 bis 13,2, speziell bei pH > 13 durchgeführt. Bei einem pH-Wert von > 12,5 sinkt die Sulfatkonzentration durch Bildung von Calciumaluminiumsulfat drastisch ab und bleibt bis pH 13,6 etwa konstant. Bei noch höheren pH-Werten steigt die Sulfatkonzentration wieder an aufgrund der erhöhten Löslichkeit von Calciumaluminiumsulfat.

Die Einstellung des pH-Wertes erfolgt je nach pH-Wert der sulfathaltigen Ausgangslösung entweder mittels der Fällungsmittel selbst (wenn die sulfathaltige Ausgangslösung neutral oder basisch ist) oder durch übliche pH-Werteinstellung mittels Natronlauge (NaOH), wenn die sulfathaltige Ausgangslösung sauer ist und durch Zugabe der Fällungsmittel ein pH-wert von über 12,5 nicht erreicht wird.

Andererseits können zur Einstellung eines spezifischen pH-Wertes oder spezifischen pH-Wertbereiches erforderlichenfalls auch Salzsäure (HCl) oder irgendeine andere geeignete Säure bzw. Natronlauge (NaOH) oder irgendeine andere geeignete Base verwendet werden.

Das erfindungsgemäße Verfahren wird vorzugsweise bei einer Temperatur in dem Bereich von 5 bis 35°C, insbesondere bei 15 bis 25°C, durchgeführt. Besonders bevorzugt ist die Anwendung von Raumtemperatur.

Bei der Durchführung des erfindungsgemäßen Verfahrens können die Kalkhydrat-Suspension (auch als Kalkmilch bezeichnet) und die Natriumhydroxoaluminat-Lösung jeweils einzeln gleichzeitig oder nacheinander zugegeben werden. Es ist aber auch möglich, für die Fällung ein Gemisch aus der Kalkhydrat-Suspension und der Natriumhydroxoaluminat-Lösung zu verwenden.

Als Natriumhydroxoaluminat-Lösung wird vorzugsweise eine wäßrige Natriumhydroxoaluminatlösung mit einem Molverhältnis $Al_2O_3$:$Na_2O$ von 1:(1,5 bis 2,5) verwendet. Zur Durchführung des erfindungsgemäßen Verfahrens besonders gut geeignet ist die Verwendung einer technischen Natriumhydroxoaluminatlösung mit der Handelsbezeichnung SULAN®, die 7,0 Gew.-% Al und 16,0 Gew.-% $Na_2O$ enthält. Besonders geeignet ist die Verwendung eines Gemisches von Kalkmilch und SULAN® als Fällungsmittel, speziell einer Kalkmilch-SULAN®-Suspension mit einem Massenverhältnis Ca(OH)$_2$:SULAN® von 1,0:(1,0 bis 2,5), besonders bevorzugt von 1,0:(1,0 bis 2,0).

Wenn der Sulfatgehalt der Ausgangslösung sehr hoch ist, beispielsweise 2000 mg/l und mehr beträgt, wird der spontanen chemischen Sulfatfällung als Calciumaluminiumsulfat nach dem erfindungsgemäßen Verfahren vorzugsweise eine Sulfatfällung als Gips vorgeschaltet, die auf an sich bekannte Weise durchgeführt werden kann.

Das bei der Durchführung des erfindungsgemäßen Verfahrens erhaltene Fällungsprodukt wird vorzugsweise durch Sedimentation oder in einer Kammerfilterpresse oder Bandpresse abgetrennt und gegebenenfalls zu einem chloridarmen, aluminiumoxidhaltigen Gips-Anhydrit weiterverarbeitet, beispielsweise nach einem Verfahren, wie es in der DE-PS 3 913 822 beschrieben ist.

Es ist aber auch möglich, mindestens einen Teil des Fällungsprodukts in den Sulfatfällungskreislauf zurückzuführen, um dadurch eine noch vollständigere Sulfatausfällung zu erzielen.

Wichtig bei der Sulfatfällung als Calciumaluminiumsulfat nach dem erfindungsgemäßen Verfahren ist die Zusammensetzung des sich bildenden Calciumaluminiumsulfats. Bei Verwendung von beispielsweise industriell gewonnenen Calciumaluminaten (wie z.B. Tonerdeschmelzzement gemäß EP-B-0 250 626) entsteht nebenbei auch Calciumcarbonat. Tonerdeschmelzzement enthält zusätzlich Eisenoxid (5 bis 15 % $Fe_2O_3$) und Silicate (3 bis 8 % $SiO_2$), die das Fällungsprodukt Calciumaluminiumsulfat zusätzlich verunreinigen. Für die spätere Verwertung von Calciumaluminiumsulfat ist es jedoch äußerst wichtig, daß ein reproduzierbares Produkt abgeschieden werden kann. Nur mit einem solche Produkt, wie es erfindungsgemäß erhalten wird, ist dann die großtechnische Verwertung von Calciumaluminiumsulfat beispielsweise nach einem Verfahren, wie es in DE-PS 3 913 822 beschrieben ist, im Rahmen eines thermischen Prozesses möglich. Dabei wird nach dem Entwässern des Calciumaluminiumsulfats über eine Kammerfilterpresse oder Bandpresse der Filterkuchen in einer zirkulierenden Wirbeschicht bei 450°C bis 650°C in Gegenwart eines Sauerstoff enthaltenden Gases und unter Einsatz einer schwefelhaltigen Substanz, z.B. Schwefelsäure, zur Reaktion gebracht, wobei freies CaO zu $CaSO_4$ sulfatisiert und das Kristallwasser abgespalten wird. Als Endprodukt entsteht ein aluminiumoxidhaltiger Gips-Anhydrit, bei dem es sich um einen direkt vermarktungsfähigen Baustoff handelt. Verunreinigungen durch Carbonat, Silicat, Eisenoxid und dgl. würden diesen Prozeß erheblich stören.

Gegenstand der vorliegenden Erfindung ist daher auch die Anwendung des vorstehend beschriebenen Verfahrens zur technischen Herstellung von hloridarmem, aluminiumoxidhaltigem Gips-Anhydrit, das dadurch gekennzeichnet ist, daß das abgeschiedene Calciumaluminiumsulfat über eine Kammerfilterpresse oder Bandpresse entwässert, der dabei erhaltene Filterkuchen in einer zirkulierenden Wirbelschicht in Gegenwart eines sauerstoffhaltigen heißen Gases (vorzugsweise von 550°C) und durch Einsprühen von Schwefelsäure derart zur Reaktion gebracht wird, daß freies CaO zu $CaSO_4$ sulfatisiert und das Kristallwasser abgespalten wird unter Bildung eines chloridarmen, alumniniumoxidhaltigen Gips-Anhydrits.

Die Erfindung wird nachstehend unter Bezugnahme auf die beiliegenden Zeichnungen und anhand konkreter Ausführungsbeispiele näher erläutert. In diesen wurde als Basis für die stöchiometrische Betrachtung dem Fällungsprodukt Calciumaluminiumsulfat die Summenformel $Al_2(SO_4)_3.6Ca(OH)_2.26H_2O$ zugrunde gelegt. Es zeigen:

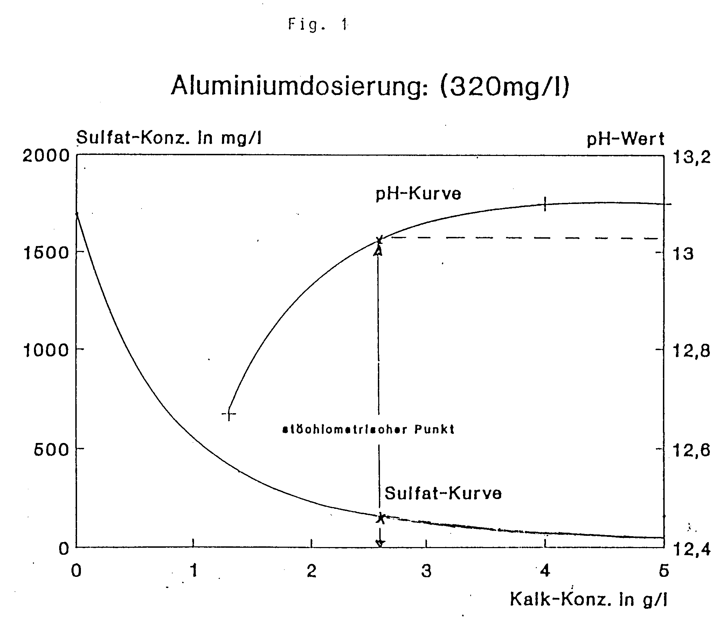

Fig. 1    den Verlauf der Sulfatfällung und des pH-Wertes in dem erfindungsgemäß verwendeten Fällungsgemisch bei konstanter Aluminiumdosierung (in mg/l) und variabler Kalkzugabe (in g/l); und

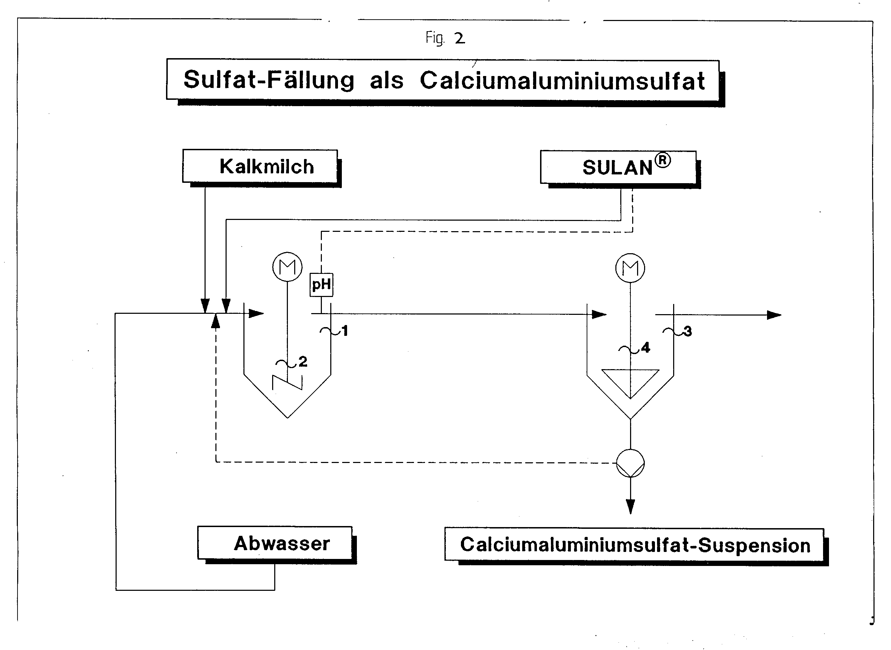

Fig. 2    den schematischen Aufbau einer Vorrichtung zur Durchführung des erfindungsgemäßen Verfahrens mit einem Reaktionsbehälter 1, der mit einem schnellaufenden Propellerrührer 2 ausgestattet ist, zur Durchführung der Fällungsreaktion und einem Eindickungsbehälter 3, der mit einem langsam laufenden Rührer 4 zur Unterstützung der Sedimentation ausgestattet ist. Die Einleitung des zu behandelnden Abwassers und der Fällungsmittel erfolgt in üblicher Weise mittels geeigneter Dosierpumpen. Die aus dem Eindickungsbehälter abgezogene Calciumaluminiumsulfat-Suspension kann auf einer Kammerfilterpresse oder einer Bandpresse entwässert und dann zu aluminiumhaltigem Gips-Anhydrit weiterverarbeitet werden.

Die nachstehend beschriebenen Ausführungsbeispiele zur Fällung von Sulfat als Calciumaluminiumsulfat aus sulfathaltigen Abwässern wurden durchgeführt mit einer Calciumhydrat-Suspension (Kalkmilch) sowie einer technischen Natriumhydroxoaluminat mit der Handelsbezeichnung SULAN[®] und der chemischen Charakteristik:
Al = 7,0 Gew.-%, $Na_2O$ = 16,0 Gew.-% als Fällungsmittel.
Entsprechend der Summenformel $Al_2(SO_4)_3.6Ca(OH)_2.26H_2O$ ergibt sich ein stöchiometrisches Ionen-Verhältnis von:

$$3SO_4^{2-}:2Al^{3+}:6Ca(OH)_2$$

Daraus ist abzuleiten, daß zur Fällung von 1 g Sulfat benötigt werden:

$$187,5 \text{ mg } Al^{3+} \text{ bzw. } 2678,6 \text{ mg SULAN}^{®} + 1543,8 \text{ mg } Ca(OH)_2$$

Die folgenden Versuche wurden mit einem Abwasser mit einer Sulfatkonzentration von 1700 mg/l durchgeführt.
Die Fällungen wurden jeweils mit 1000 ml Wasser in einem Reihenrührgerät mit einer Rührgeschwindigkeit von 500 UpM durchgeführt. Es wurde 15 min lang gerührt, danach wurde das Fällungsprodukt über Faltenfilter filtriert und im Filtrat wurde der Gehalt an Restsulfat durch Ionenchromatographie bestimmt.

Beispiel 1: Dosierrate Hydroxoaluminat

Es wurde bei konstanter SULAN[®]-Dosierung gearbeitet und der Aluminium-Gehalt jeweils auf die stöchiometrisch notwendige Menge von 320 mg/l $Al^{3+}$ eingestellt. Die Dosierrate an Kalkhydrat (Kalk-Konzentration in g/l) wurde verändert. Die beiliegende Fig. 1 zeigt, daß mit der stöchiometrisch notwendigen Kalkhydrat-Dosierung von 2,624 g eine Sulfat-Restkonzentration von 100 mg/l bei einem pH-Wert von über 13 erreicht worden ist.

Beispiel 2: Calciumaluminiumsulfat-Gewinnung in technischem Maßstab

In Anlehnung an die vorstehend beschriebenen Versuche wurde die Sulfat-Fällung auch in technischem Maßstab durchgeführt. Dazu wurde eine Anlage (vgl. Fig. 2) benutzt, die im wesentlichen aus folgenden Aggregaten bestand:

Beschickungspumpe (1 $m^3$/h)
Reaktionsbehälter (V = 250 l)
Eindicker (V = 800 l)
Dosierpumpen für Chemikalien

Die Anlage wurde mit 1 $m^3$ Abwasser pro Stunde mit einem Sulfat-Gehalt von 1700 mg/l $SO_4^{2-}$ beschickt. Entsprechend dem stöchiometrischen Verhältnis von 1 (s. Beispiel 1) wurden SULAN[®] und Kalkmilch bei Dosierraten von 320 mg $Al^{3+}$ und 2,6 g/l Kalkhydrat getrennt, jedoch gleichzeitig in den Reaktor mit Rührwerk zugegeben. Somit betrug die Dosierrate bei einer Sulfatfracht von 1,7 kg $SO_4^{2-}$ pro Stunde:

SULAN[®]       = 4,3 kg/h
Kalkhydrat     = 2,6 kg/h
               = 26,0 kg/h als 10%ige Kalkmilch

Weil es sich dabei um einen Durchfluß-Reaktor mit kontinuierlicher Beschickung handelte, stellte sich ein Gleichgewicht zwischen Fällungsprodukt und zufließendem Abwasser mit zufließenden Fällungschemikalien ein.
Aus dem Reaktor floß die Suspension in den Eindicker und wurde durch Sedimentation geklärt. Im Überlauf wurde die Sulfat-Restkonzentration ermittelt. Der pH-Wert stellte sich auf 13,1 ein. Die Sulfat-Restkonzentration betrug 78 mg/l.
Erfindungsgemäß wurde somit unter Beweis gestellt, daß eine spontane Sulfat-Fällung in einem Durchlauf-Reaktor bei einer Verweilzeit von ca. 15 Minuten (im Reaktor) möglich ist.

Beispiel 3: Calciumaluminiumsulfat-Gewinnung mit einem Fällungsmittelgemisch

In Anlehnung an Beispiel 2 wurden die Fällbedingungen dahingehend geändert, daß die beiden Fällungsmittel nicht getrennt, sondern als eine Suspension, bestehend aus Kalkmilch plus SULAN$^®$, dosiert wurden. Entsprechend der zuvor eingestellten Dosierraten wurden im Verhältnis von 26,0 kg Kalkmilch (10 % Ca(OH)$_2$) und 4,3 kg SULAN$^®$ (Natriumhydroxoaluminat mit 7 % Al) gemischt und somit 30,3 kg Suspension pro Stunde in den Reaktor dosiert. Nach der Sedimentation des sich bildenden Calciumaluminiumsulfats wurde im Überlauf eine Sulfat-Restkonzentration von 94 mg/l ermittelt.

Erfindungsgemäß wurde damit unter Beweis gestellt, daß eine spontane Sulfat-Fällung in einem Durchlaufreaktor auch bei Zugabe eines Fällungsmittel-Gemisches bestehend aus Kalkmilch plus SULAN$^R$ erreicht wird.

Beispiel 4: Weiterverarbeitung von Calciumaluminiumsulfat zu Gips-Anhydrit

Weil bei der Fällung aus 1 g Sulfat etwa 5 g Calciumaluminiumsulfat entstehen, ist eine wirtschaftliche und ökologisch sinnvolle Entsorgung des Fällungsproduktes geboten.

Diese weitere Aufgabenstellung wurde erfinderisch dadurch gelöst, daß nach der DE-C- 3 913 822 eine thermische Behandlung durchgeführt wurde, wobei im wesentlichen das freie CaO in CaSO$_4$ umgewandelt und das Kristallwasser entfernt wurde. Das nach dem erfindungsgemäßen Fällungsprozeß abgeschiedene Calciumaluminiumsulfat wurde über eine Kammerfilterpresse entwässert und der erhaltene Filterkuchen in einer zirkulierenden Wirbelschicht bei 450 bis 650°C in Gegenwart eines O$_2$-haltigen Gases und unter Einsatz einer schwefelhaltigen Substanz, z.B. Schwefelsäure, derart zur Reaktion gebracht, daß freies CaO zu CaSO$_4$ sulfatisiert und das Kristallwasser abgespalten wurde, so daß sich ein aluminiumoxidhaltiger Gips-Anhydrit bildete. Somit wurde ein vermarktungsfähger Baustoff gewonnen.

**Patentansprüche**

1. Verfahren zur spontanen chemischen Fällung von in Wasser gelösten Sulfaten als Calciumaluminiumsulfat durch Verwendung einer Kalkhydrat-Suspension (Kalkmilch) und einer Natriumhydroxoaluminat-Lösung als Fällungsmittel, dadurch **gekennzeichnet,** daß dem sulfathaltigen Wasser nach der Bestimmung seines Sulfatgehaltes die Kalkhydrat-Suspension und die Natriumhydroxoaluminat-Lösung in solchen Mengen zugegeben werden, daß das Molverhältnis SO$_4$$^{2-}$:Al$_2$O$_3$:CaO 1,0:(0,2 bis 0,34): (0,8 bis 2,0) beträgt, mit der Maßgabe, daß die Fällung unter Rühren durchgeführt wird, wobei der pH-Wert auf über 12,5 eingestellt wird.

2. Verfahren nach Anspruch 1, dadurch gekennzeichnet, daß die Kalkhydrat-Suspension und die Natriumhydroxoaluminat-Lösung in solchen Mengen zugegeben werden, daß das Molverhältnis SO$_4$$^{2-}$ : Al$_2$O$_3$ : CaO 1,0 : 0,3 : 2,0 beträgt.

3. Verfahren nach Anspruch 1 oder 2, dadurch gekennzeichnet, daß die Fällung bei einem pH-Wert in dem Bereich von 12,6 bis 13,6 durchgeführt wird.

4. Verfahren nach einem der Ansprüche 1 bis 3, dadurch gekennzeichnet, daß die Fällung bei einem pH-Wert in dem Bereich von 12,8 bis 13,2 durchgeführt wird.

5. Verfahren nach einem der Ansprüche 1 bis 4, dadurch gekennzeichnet, daß die Fällung bei einem pH > 13 durchgeführt wird.

6. Verfahren nach einem der Ansprüche 1 bis 5, dadurch gekennzeichnet, daß die Fällung bei einer Temperatur in dem Bereich von 5 bis 35°C, vorzugsweise bei 15 bis 25°C, insbesondere bei Raumtemperatur, durchgeführt wird.

7. Verfahren nach einem der Ansprüche 1 bis 6, dadurch gekennzeichnet, daß die Kalkhydrat-Suspension und die Natriumhydroxoaluminat-Lösung gleichzeitig oder nacheinander zugegeben werden.

8. Verfahren nach einem der Ansprüche 1 bis 6, dadurch gekennzeichnet, daß die Kalkhydrat-Suspension und die Natriumhydroxoaluminat-Lösung als Gemisch zugegeben werden.

9. Verfahren nach Anspruch 8, dadurch gekennzeichnet, daß eine Natriumhydroxoaluminat-Lösung mit einem Molverhältnis Al$_2$O$_3$ : Na$_2$O von 1 : (1,5 bis 2,5) verwendet wird.

10. Verfahren nach einem der Ansprüche 1 bis 9, dadurch gekennzeichnet, daß als Natriumhydroxoaluminat-Lösung eine technische Natriumhydroxoaluminatlösung mit der Handelsbezeichnung SULAN$^®$, enthaltend 7,0 Gew.-% Al und 16,0 Gew.-% $Na_2O$, verwendet wird.

**11.** Verfahren nach einem der Ansprüche 1 bis 10, dadurch gekennzeichnet, daß als Fällungsmittel ein Gemisch von Kalkmilch und SULAN$^®$ zugegeben wird.

**12.** Verfahren nach Anspruch 11, dadurch gekennzeichnet, daß als Fällungsmittel eine Kalkmilch-SULAN$^®$-Suspension mit einem Massenverhältnis $Ca(OH)_2$ : SULAN$^®$ von 1,0 : (1,0 bis 2,5) zugegeben wird.

**13.** Verfahren nach Anspruch 11 oder 12, dadurch gekennzeichnet, daß als Fällungsmittel eine Kalkmilch-SULAN$^®$-Suspension mit einem Massenverhältnis $Ca(OH)_2$ : SULAN$^®$ von 1,0 : (1,0 bis 2,0) zugegeben wird.

**14.** Verfahren nach einem der Ansprüche 1 bis 13, dadurch gekennzeichnet, daß das Fällungsprodukt, das mindestens zum Teil in die Sulfatfällung recyclisiert werden kann, auf an sich bekannte Weise, vorzugsweise durch Sedimentation oder in einer Kammerfilter- oder Bandpresse, abgetrennt und gegebenenfalls zu Aluminiumoxid-haltigem Gips-Anhydrit weiterverarbeitet wird.

**15.** Verfahren nach einem der Ansprüche 1 bis 14, dadurch gekennzeichnet, daß der spontanen chemischen Sulfatfällung als Calciumaluminiumsulfat eine Sulfatfällung als Gips vorgeschaltet wird.

**16.** Anwendung des Verfahrens nach einem der Ansprüche 1 bis 15 zur technischen Herstellung von chloridarmem, aluminiumoxidhaltigem Gips-Anhydrit, dadurch gekennzeichnet, daß das abgeschiedene Calciumaluminiumsulfat über eine Kammerfilter- oder Bandpresse entwässert, der dabei erhaltene Filterkuchen in einer zirkulierenden Wirbelschicht bei 450 bis 650°C in Gegenwart eines sauerstoffhaltigen Gases und unter Einsatz einer schwefelhaltigen Substanz, z.B. Schwefelsäure, derart zur Reaktion gebracht wird, daß freies CaO zu $CaSO_4$ sulfatisiert und das Kristallwasser abgespalten wird unter Bildung eines chloridarmen, aluminiumoxidhaltigen Gips-Anhydrits.

**17.** Verfahren nach einem der Ansprüche 1 bis 16, dadurch gekennzeichnet, daß die Fällung mit Calciumoxid und Natriumhydroxoaluminat bei einem pH-Wert in dem Bereich von 12,6 bis 13,6 durchgeführt wird.

**18.** Verfahren nach einem der Ansprüche 1 bis 16, dadurch gekennzeichnet, daß die Fällung mit Kalkhydrat als Feststoff und Natriumhydroxoaluminat bei einem pH-Wert in dem Bereich von 12,6 bis 13,6 durchgeführt wird.

**19.** Verfahren nach einem der Ansprüche 1 bis 16, dadurch gekennzeichnet, daß die Fällung mit einer Calciumchloridlösung und Natriumhydroxoaluminat bei einem pH-Wert in dem Bereich von 12,6 bis 13,6 durchgeführt wird.

**20.** Verfahren nach einem der Ansprüche 1 bis 16, dadurch gekennzeichnet, daß die Fällung mit Calciumchlorid und Natriumhydroxoaluminat bei einem pH-Wert in dem Bereich von 12,6 bis 13,6 durchgeführt wird.

**21.** Verfahren nach einem der Ansprüche 1 bis 16, dadurch gekennzeichnet, daß die Fällung mit einer Calciumchlorid-SULAN$^®$-Lösung bei einem pH-Wert in dem Bereich von 12,6 bis 13,6 durchgeführt wird.

**22.** Verfahren nach einem der Ansprüche 1 bis 16, dadurch gekennzeichnet, daß die Fällung mit Calciumorganoverbindungen und Natriumhydroxoaluminat bei einem pH-Wert in dem Bereich von 12,6 bis 13,6 durchgeführt wird.

**23.** Verfahren nach einem der Ansprüche 1 bis 22, dadurch gekennzeichnet, daß die Fällungsreaktion innerhalb von 15 Minuten weitestgehend abgeschlossen ist.

**Claims**

**1.** A process for the spontaneous chemical precipitation of sulfates dissolved in water as calciumaluminum sulfate by using a suspension of lime hydrate (lime milk) and a sodium hydroxoaluminate solution as a precipitant, characterized in that the suspension of lime hydrate and the sodium hydroxoaluminate solution are added to the sulfate containing water after determination of its content of sulfate in such amounts that the mole ratio of $SO_4^{2-}:Al_2O_3:CaO$ is 1.0:(0.2 to 0.34):(0.8 to 2.0), with the provisio that the precipitation is carried out while agitating and the pH is adjusted to a value above 12.5.

**2.** The process according to claim 1, characterized in that the suspension of lime hydrate and the sodium hydroxoaluminate solution are added in such amounts that the mole ratio of $SO_4^{2-}:Al_2O_3:CaO$ is 1.0:0.3 : 2.0.

3. The process according to claim 1 or 2, characterized in that the precipitation is carried out while the pH is in the range of from 12.6 to 13.6.

4. The process according to any of claims 1 to 3, characterized in that the precipitation is carried out while the pH is in the range of from 12.8 bis 13.2.

5. The process according to any of claims 1 to 4, characterized in that the precipitation is carried out at a pH > 13.

6. The process according to any of claims 1 to 5, characterized in that the precipitation is carried out at a temperature in the range of from 5 to 35°C, preferably from 15 to 25°C, in particular at room temperature.

7. The process according to any of claims 1 to 6, characterized in that the suspension of lime hydrate and the sodium hydroxoaluminate solution are added simultaneously or successively.

8. The process according to any of claims 1 to 6, characterized in that the suspension of lime hydrate and the sodium hydroxoaluminate solution are added as a mixture.

9. The process according to claim 8, characterized in that a sodium hydroxoaluminate solution having a mole ratio of $Al_2O_3$ : $Na_2O$ of 1 : (1.5 to 2.5) is used.

10. The process according to any of claims 1 to 9, characterized in that as the sodium hydroxoaluminate solution a technical sodium hydroxoaluminate solution having the tradename SULAN® and containing 7.0 weight% of Al and 16.0 weight% of $Na_2O$ is used.

11. The process according to any of claims 1 to 10, characterized in that as a precipitant a mixture of lime milk and SULAN® is added.

12. The process according to claim 11, characterized in that as a precipitant a suspension of lime milk and SULAN® having a weight ratio of $Ca(OH)_2$ : SULAN® of 1.0 : (1.0 to 2.5) is added.

13. The process according to claim 11 or 12, characterized in that as a precipitant a suspension of lime milk and SULAN® having a weight ratio of $Ca(OH)_2$ : SULAN® of 1.0 : (1.0 to 2.0) is added.

14. The process according to any of claims 1 to 13, characterized in that the precipitation product which can be recycled at least in part into the sulfate precipitation, can be separated in a manner known per se, preferably by sedimentation or in a chamber filter press or in a ribbon press and optionally further processed to provide an alumina-containing gypsum anhydrite.

15. The process according to any of claims 1 to 14, characterized in that the spontaneous chemical precipitation of sulfate as calciumaluminum sulfate is preceded by a precipitation of sulfate as gypsum.

16. The application of the process according to any of claims 1 to 15 for preparing in a technical manner alumina-containing gypsum anhydrite being poor of chloride, characterized in that the deposited calciumaluminum sulfate is dehydrated in a chamber filter press or in a ribbon press, that the obtained filter cake is reacted in a circulating fluidized bed at 450 to 650°C in the presence of an oxygen-containing gas and by adding a sulfur-containing substance, e.g. sulfuric acid, in such manner that any free CaO is sulfatized to $CaSO_4$ and the crystallization water is removed to form an alumina-containing gypsum anhydrite being poor of chloride.

17. The process according any of claims 1 to 16, characterized in that the precipitation with calcium oxide and sodium hydroxoaluminate is carried out at a pH in the range of from 12.6 to 13.6.

18. The process according any of claims 1 to 16, characterized in that the precipitation with lime hydrate as a solid and sodium hydroxoaluminate is carried out at a pH in the range of from 12.6 to 13.6.

19. The process according to any of claims 1 to 16, characterized in that the precipitation with a calcium chloride solution and with sodium hydroxoaluminate is carried out at a pH in the range of from 12.6 to 13.6.

20. The process according to any of claims 1 to 16, characterized in that the precipitation with calcium chloride and sodium hydroxoaluminate is carried out at a pH in the range of from 12.6 to 13.6.

21. The process according to any of claims 1 to 16, characterized in that the precipitation with a solution of calcium chloride and SULAN® is carried out at a pH in the range of from 12.6 to 13.6.

22. The process according to any of claims 1 to 16, characterized in that the precipitation is carried out with organocalcium compounds and sodium hydroxoaluminate at a pH in the range of from 12.6 to 13.6.

23. The process according to any of claims 1 to 22, characterized in that the precipitation reaction is finished to a great extent within 15 minutes.

**Revendications**

1. Procédé pour la précipitation chimique spontanée de sulfates dissous dans l'eau en tant que sulfate de calcium-aluminium par utilisation d'une suspension d'hydrate de chaux (lait de chaux) et d'une solution d'hydroxoaluminate de sodium en tant que précipitant, caractérisé par le fait qu'après la détermination du contenu en sulfate de l'eau contenant du sulfate, la suspension d'hydrate de chaux et la solution d'hydroxoaluminate de sodium sont ajoutées dans des quantités telles que le rapport molaire $SO_4^{2-}:Al_2O_3:CaO$ est de 1,0:(0,2 à 0,34):(0,8 à 2,0), sous réserve que la précipitation est effectuée en remuant, le pH étant fixé à plus que 12,5.

2. Procédé selon la revendication 1, caractérisé par le fait que la suspension d'hydrate de chaux et la solution d'hydroxoaluminate de sodium sont ajoutées dans des quantités telles que le rapport molaire $SO_4^{2-}: Al_2O_3:CaO$ est de 1,0:0,3:2,0.

3. Procédé selon la revendication 1 ou 2, caractérisé par le fait que la précipitation est effectuée à un pH entre 12,6 et 13,6.

4. Procédé selon l'une des revendications 1 à 3, caractérisé par le fait que la précipitation est effectuée à un pH entre 12,8 et 13,2.

5. Procédé selon l'une des revendications 1 à 4, caractérisé par le fait que la précipitation est effectuée à un pH > 13.

6. Procédé selon l'une des revendications 1 à 5, caractérisé par le fait que la précipitation est effectuée à une température entre 5 et 35°C, de préférence entre 15 et 25°C, en particulier à température ambiante.

7. Procédé selon l'une des revendications 1 à 6, caractérisé par le fait que la suspension d'hydrate de chaux et la solution d'hydroxoaluminate de sodium sont ajoutées simultanément ou successivement.

8. Procédé selon l'une des revendications 1 à 6, caractérisé par le fait que la suspension d'hydrate de chaux et la solution d'hydroxoaluminate de sodium sont ajoutées en mélange.

9. Procédé selon la revendications 8, caractérisé par le fait qu'on utilise une solution d'hydroxoaluminate de sodium avec un rapport molaire $Al_2O_3:Na_2O$ de 1:(1,5 à 2,5).

10. Procédé selon l'une des revendications 1 à 9, caractérisé par le fait que l'on utilise une solution technique d'hydroxoaluminate de sodium avec la dénomination commerciale SULAN® en tant que solution d'hydroxoaluminate de sodium comprenant 7,0% en poids d'Al et 16,0% en poids de $Na_2O$.

11. Procédé selon l'une des revendications 1 à 10, caractérisé par le fait qu'en tant que précipitant on ajoute un mélange de lait de chaux et de SULAN®.

12. Procédé selon la revendication 11, caractérisé par le fait qu'en tant que précipitant on ajoute une suspension de lait de chaux et de SULAN® avec un rapport de masse $Ca(OH)_2$:SULAN® de 1,0:(1,0 à 2,5).

13. Procédé selon la revendication 11 ou 12, caractérisé par le fait qu'en tant que précipitant on ajoute une suspension de lait de chaux et de SULAN® avec un rapport de masse $Ca(OH)_2$:SULAN® de 1,0:(1,0 à 2,0).

14. Procédé selon l'une des revendications 1 à 13, caractérisé par le fait que le précipité, qui peut être recyclé au moins partiellement dans la précipitation de sulfate, est séparé de façon en soi connue de préférence par sédimentation ou dans un filtre-presse à chambres ou une presse de bande et, le cas échéant, transformé en un anhydrite de gypse contenant de l'oxyde d'aluminium.

**15.** Procédé selon l'une des revendications 1 à 14, caractérisé par le fait que la précipitation chimique spontanée de sulfate en forme de sulfate de calcium-aluminium est précédée par une précipitation de sulfate en forme de gypse.

**16.** Application du procédé selon l'une des revendications 1 à 15 pour la réalisation technique d'un anhydrite de gypse pauvre en chlorure et contenant de l'oxyde d'aluminium, caractérisé par le fait que le sulfate de calcium-aluminium précipité est déshydraté au moyen d'un filtre-presse à chambres ou d'une presse de bande, que le gâteau de filtrage ainsi obtenu est mis à réagir dans un lit fluidisé circulant à 450 à 650°C en présence d'un gaz contenant de l'oxygène, et en utilisant une substance sulfureuse, par exemple l'acide sulfurique, de telle façon que du CaO libre est sulfaté pour devenir $CaSO_4$ et que l'eau cristallisée est éliminée en formant un anhydrite de gypse pauvre en chlorure et contenant de l'oxyde d'aluminium.

**17.** Procédé selon l'une des revendications 1 à 16, caractérisé par le fait que la précipitation avec de l'oxyde de calcium et de l'hydroxoaluminate de sodium est effectuée à un pH dans la gamme allant de 12,6 à 13,6.

**18.** Procédé selon l'une des revendications 1 à 16, caractérisé par le fait que la précipitation avec l'hydrate de chaux en tant que matière solide et de l'hydroxoaluminate de sodium est effectuée à un pH dans la gamme allant de 12,6 à 13,6.

**19.** Procédé selon l'une des revendications 1 à 16, caractérisé par le fait que la précipitation avec une solution de chlorure de calcium et de l'hydroxoaluminate de sodium est effectuée à un pH dans la gamme allant de 12,6 à 13,6.

**20.** Procédé selon l'une des revendications 1 à 16, caractérisé par le fait que la précipitation avec du chlorure de calcium et l'hydroxoaluminate de sodium est effectuée à un pH dans la gamme allant de 12,6 à 13,6.

**21.** Procédé selon l'une des revendications 1 à 16, caractérisé par le fait que la précipitation avec une solution de chlorure de calcium-SULAN® est effectuée à un pH dans la gamme allant de 12,6 à 13,6.

**22.** Procédé selon l'une des revendications 1 à 16, caractérisé par le fait que la précipitation avec des composés d'organo-calcium et de l'hydroxoaluminate de sodium est effectuée à un pH dans la gamme allant de 12,6 à 13,6.

**23.** Procédé selon l'une des revendications 1 à 16, caractérisé par le fait que la réaction de précipitation est largement terminée au bout de 15 minutes.

## Fig. 1

# Aluminiumdosierung: (320mg/l)

Sulfat-Konz. In mg/l

pH-Wert

pH-Kurve

stöchlometrischer Punkt

Sulfat-Kurve

Kalk-Konz. In g/l

EP 0 584 502 B1

Fig. 2

**Sulfat-Fällung als Calciumaluminiumsulfat**

Kalkmilch

SULAN®

pH

Abwasser

Calciumaluminiumsulfat-Suspension

EP 0 584 502 B1